(19) Europäisches Patentamt

European Patent Office

Office européen des brevets

(11) **EP 0 695 912 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int Cl.$^7$: **F23J 15/00**, B01D 53/50, B03B 9/04

(21) Anmeldenummer: **95810457.2**

(22) Anmeldetag: **11.07.1995**

(54) **Verfahren zur Reststoffbehandlung in Müllverbrennungsanlagen**

Treatment process for residual materials in incinerator plants

Procédé de traitement de matières résiduelles dans les installations d'incinération

(84) Benannte Vertragsstaaten:
**AT CH DE DK ES GB IT LI SE**

(30) Priorität: **06.08.1994 DE 4427899**

(43) Veröffentlichungstag der Anmeldung:
**07.02.1996 Patentblatt 1996/06**

(73) Patentinhaber: **ABB RESEARCH LTD.**
**8050 Zürich (CH)**

(72) Erfinder:
• **Balg, Jürgen, Dr.**
**CH-5415 Nussbaumen (CH)**

• **Selinger, Adrian, Dr.**
**CH-5442 Fislisbach (CH)**
• **Simon, Franz, Dr.**
**CH-5430 Wettingen (CH)**

(74) Vertreter: **Hetzer, Hans Jürgen et al**
**Asea Brown Boveri AG**
**Immaterialgüterrecht(TEI)**
**Haselstrasse 16/699 I**
**5401 Baden (CH)**

(56) Entgegenhaltungen:
**EP-A- 0 304 412          WO-A-89/12609**
**CH-A- 635 755          GB-A- 2 107 207**

**Beschreibung**

**TECHNISCHES GEBIET**

Die Erfindung bezieht sich auf ein Verfahren zur Reststoffbehandlung in Müllverbrennungsanlagen, bei welchem die bei der Verbrennung anfallende Schlacke ohne vorherige Abschreckung in Wasser trocken ausgetragen und in mindestens zwei Fraktionen aufgetrennt wird, wobei eine Fraktion den Feinanteil enthält, und mit einer Rauchgasreinigung, die zumindest eine Stufe zur Entfernung von Schwefeldioxid aus dem Rauchgas umfasst.

**TECHNOLOGISCHER HINTERGRUND UND STAND DER TECHNIK**

Bei der Verbrennung von Siedlungsabfällen fallen im Prozess verschiedene Reststofffraktionen an: Schlacke (250 kg/Tonne Müll), Filterstaub (20 - 30 kg/Tonne Müll), Chlorwasserstoff (7 kg/Tonne Müll) aus dem Nasswäscher der Rauchgasreinigungsanlage und Schwefeldioxid (2 kg/Tonne Müll). Eine Verwendung dieser Reststoffe ist ohne vorgängige Aufarbeitung nicht möglich.

Filterstaub ist wegen des hohen Gehalts an Schwermetallen und organischen Materialien als Sondermüll einzustufen. Eine Verwertung, z.B. im Gehwegebau, ist jedoch durch Verglasung des Staubs möglich. Aus Schwefeldioxid kann durch geschickte Prozessführung Gips als Werkstoff erzeugt werden. Problematisch ist die Aufarbeitung des Chlorwasserstoffs, da zur Herstellung von verwertbarer Salzsäure in technischer Qualität extrem aufwendige Verfahren mit mehrstufiger Rektifikation notwendig sind. Die Schlacke schliesslich ist mit Schwermetallen belastet und wird daher heute oftmals geordnet deponiert.

In der jüngsten Vergangenheit sind nun Verfahren zur Behandlung dieser Schlacke entwickelt worden, welche zum Ziel haben, die Schlacke so aufzubereiten, dass ein Grossteil der gesamten Schlackenmenge unbedenklich wiederverwertet werden kann, und nur noch ein vergleichsweise kleiner Anteil sonderbehandelt werden muss.

So wird in der EP-Patentschrift 0 372 039 ein Verfahren beschrieben, bei dem die Schlacke trocken ausgetragen wird. Dem bekannten Verfahren liegt die Erkenntnis zugrunde, dass bei trocken ausgetragener Schlacke und nachfolgender Siebung die Feinfraktion < 2mm den grössten Teil der ursprünglich in der Schlacke beim Schlackenaustritt enthaltenen Schadstoffe enthält. Sie ist mengenmässig gering im Vergleich zur Grobfraktion und nur diese Feinfraktion muss einer Sonderbehandlung zugeführt werden. Andererseits enthält diese Feinfraktion aber auch noch Wertstoffe, die durchaus wiederverwendet werden könnten. Auf welche Weise dieser Feinanteil weiterbehandelt werden muss, ist in dem genannten Dokument nicht beschrieben.

In der Rauchgasreinigung werden häufig Techniken eingesetzt, die auf der Zugabe wässriger $Ca(OH)_2$- oder $CaCO_3$-Suspensionen zur Abscheidung von $SO_2$ beruhen. Die Bereitstellung dieser an sich billigen Ausgangssubstanzen ist jedoch mit Aufwand verbunden.

Es wäre daher wünschenswert, die aus der Schlackenaufbereitung anfallenden Abfallstoffe in der Anlage selbst wiederzuverwenden, wie es beispielsweise in allgemeiner Form in dem Aufsatz von Zechner "MR-Verfahren der AE&E am Beispiel der Wiener Abfallverbrennungsanlagen" in "Müll und Abfall", Beiheft 31, 1994, S.106 - 109, vorgeschlagen wird, nämlich Nutzung der beim Verbennungsungsprozess anfallenden basischen Anteile aus Schlacke und Asche für den Rauchgasreinigungsprozess, um Chemikalien einzusparen und die Reststoffmengen zu verringern. Dort wird ein Teil des Waschwassers aus dem Rauchreinigungsprozess über den Nassentschlacker geleitet. Hier findet bei entsprechender Verweilzeit eine intensive Laugung der Schlacke satt, wobei Chlorid-, Sulfat-, Calzium- und Alkaliionen in Lösung gehen.

Die Recherche nennt eine Fülle von Dokumenten, von denen nur die DE-Offenlegungsschrift hinsichtlich Aufgabe und Lösung dem Anmeldungsgegenstand nahekommt.

Aus der DE-A-2 257 798 ist ein Verfahren bekannt, das auf die Nutzbarmachung des in Schlacken von Hochöfen, Konvertern etc. enthaltenen Calziums gerichtet ist. Beim bekannten Verfahren wird die gesamte Schlacke pulverisiert und dann in Wasser suspendiert. Mit der wässrigen Suspension oder Schlammlösung als Absorbens wird dann schwefeloxidhaltiges Abgas gewaschen, wodurch Schwefeldioxid aus dem Abgas entfernt wird.

**KURZE DARSTELLUNG DER ERFINDUNG**

Der Erfindung liegt die Aufgabe zugrunde, ein Verfahren zur Reststoffbehandlung in Müllverbrennungsanlagen anzugeben, bei dem auch der bei der Schlackenaufbereitung anfallende Feinanteil zumindest teilweise wiederverwendet werden kann.

Diese Aufgabe wird bei einem Verfahren der eingangs genannten Gattung erfindungsgemäss dadurch gelöst, dass nur die den Feinanteil der Schlacke enthaltende Fraktion gewaschen wird, und daß das Waschwasser dieses Waschprozesses, das im wesentlichen Alkali- und Erdalkali-Chloride und -Hydroxide enthält, in das Rauchgas der Verbrennungsanlage eingetragen wird und zur Abscheidung von Schwefeldioxid herangezogen wird.

Beim erfindunggemässen Verfahrens wird also das Abwasser eines Prozesschrittes als Rohstoffsubstitut in einem anderen Prozesschritt eingesetzt und auf diese Weise Rohstoff eingespart und zugleich die Abwasserbehandlung vereinfacht. Es eignet sich insbesondere für solche Müllverbrennungsanlagen, bei denen die mit dem Grossteil an Schadstoffen beladene Feinfraktion ohnehin sonderbehandelt werden muss.

Insoweit unterscheidet sich das erfindungsgemässe Verfahren auch von demjenigen nach der eingangs genannten DE-A-2 257 798. Dort wird die gesamte nass ausgetragene Schlacke ohne vorgängige Klassierung verwendet. Beim erfindungsgemässen Verfahren hingegen wird nur der Feinanteil der trocken ausgetragenen Schlacke verwendet, in welchem Feinanteil der Calziumgehalt etwa um den Faktor 3 höher ist ist als bei Verwendung unklassierter Schlacke.

Das Zusammenführen zweier Stoffströme (Rauchgas und Waschwasser) ist bezüglich der Schadstoffbilanz unproblematisch, da mit einer einfachen Filtration ein praktisch reiner Feststoff ($CaSO_2 \cdot 2H_2O$ = Gipshydrat) und eine ohnehin aufzubereitende Salzlösung gewonnen werden.

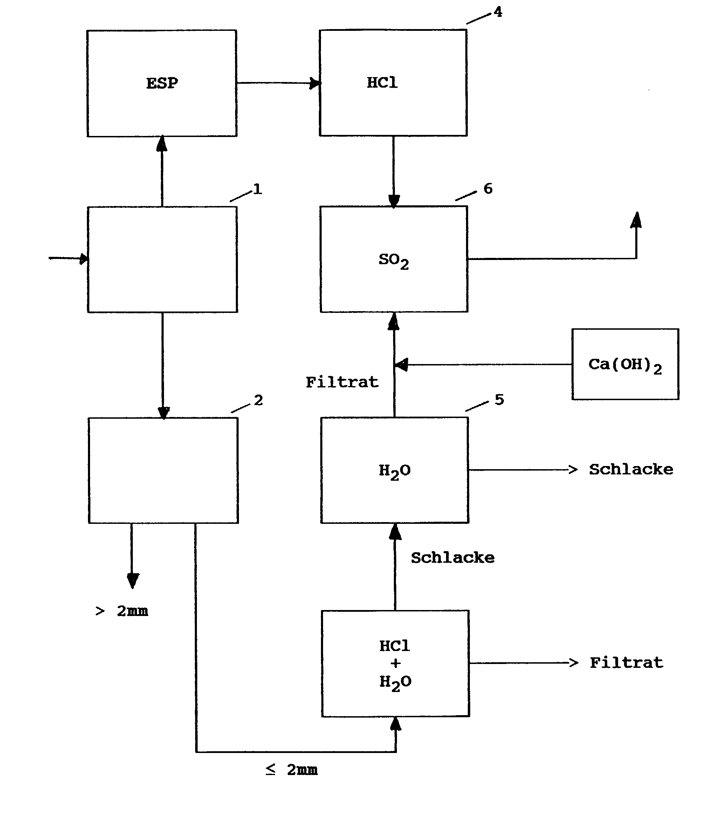

Ein Ausführungsbeispiel der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch in Form eines Flussdiagramms schematisch dargestellt.

### WEGE ZUR AUSFÜHRUNG DER ERFINDUNG

Gemäss der Figur wird Schlacke aus einem Verbrennungsofen 1 einer Müllverbrennungsanlage trocken ausgetragen. Das Rauchgas gelangt über eine Filteranordnung ESP in weitere Gasaufbereitungsstufen und von dort aus in den Kamin ins Freie.

Die Schlacke wird in einer Trennstation 2 z.B. nach dem in der EP-0 372 039 B1 beschriebenen Verfahren im wesentlichen in zwei Fraktionen aufgetrennt: eine Fraktion > 2mm, die grundsätzlich ohne weitere Behandlung als Baustoff verwendet werden kann, und eine Feinfraktion ≤ 2mm, in welcher bis 90 % aller Schadstoffe enthalten sind.

Diese Feinfraktion wird in einer ersten Waschstufe 3 durch Waschen mit verdünnter Salzsäure aus einer nassen Rauchgasreinigungsstufe 4 gewaschen. Es entsteht-ein calziumchlorid- und schwermetallhaltiges, saures Filtrat und eine Schlackenfraktion.

Diese Schlackenfraktion wird in einer zweiten Waschstufe 5 mit Wasser gewaschen, wobei eine aufbereitete Schlackenfraktion und ein alkalisches Filtrat entsteht.

Dieses Filtrat kann aufgrund seiner Zusammensetzung grundsätzlich zur Abscheidung von $SO_2$ in der $SO_2$-Abscheidestufe 6 einer nassen Rauchgasreinigung verwendet werden. Weil diese jedoch regelmässig überstöchiometrisch betrieben wird, empfiehlt es sich, dem Filtrat Calciumhydroxid, Kalkstein oder bevorzugt feingemahlene Schlacke, und zwar den oben genannten Feinanteil ≤ 2mm zuzumischen. Die so erhaltene Mischung wird in das Rauchgas aus der Müllverbrennung eingetragen, wobei gereinigtes Rauchgas, Gipshydrat und eine salzhaltige Waschlösung entsteht.

Die salzhaltige Waschlösung kann optional zur sauren HCl-Wäsche in der HCl-Abscheidestufe einer nassen Rauchgasreinigung verwendet werden, wobei gegebenenfalls vorgängig ein Teil der Chloride ausgeschleusst wurde.

Die nachfolgenden chemischen Gleichungen verdeutlichen die wichtigsten in den einzelnen Prozesschritten sich abspielenden chemischen Prozesse:

In der sauren Waschstufe:

$$2\ HCl + MO \rightarrow MCl_2 + H_2O$$

[M = zweiwertiges Metall]

Im nachfolgenden Waschschritt mit Wasser:

$$H_2O + CaO \rightarrow Ca(OH)_2 + H_2O$$

Schwefeldioxid-Abscheidung:

$$Ca(OH)_2 + SO_2 + [O] \rightarrow CaSO_4 + H_2O$$

Bei der Schwefeldioxid-Abscheidung im Dual-Alkali-Verfahren, einem häufig in Rauchgasentschwefelungsanlagen verwendeten Verfahren, bei welchem durch Umsalzen aus preiswertem Kalkhydrat teure Natronlauge erzeugt wird, die sich besonders zur Abscheidung von $SO_2$ eignet:

$$Na_2SO_4 + Ca(OH)_2 \rightarrow CaSO_4 + 2NaOH$$

$$2\ NaOH + SO_2 + [O] \rightarrow Na_2SO_4 + H_2O$$

Das erfindungsgemässe Verfahren wurde vorstehend anhand einer Müllverbrennungsanlage beschrieben. Es eignet sich jedoch für alle Prozesse, bei denen eine $Ca(OH)_2$-haltige Waschlösung aus einer Rostaschenaufbereitung zur Gipsabscheidung eingesetzt wird.

### Bezeichnungsliste

1 Verbrennungsofen
2 Trennvorrichtung
3 erste Waschstufe (HCl)
4 nasse Rauchgasreinigung
5 zweite Waschstufe (Wasser)
6 $SO_2$-Abscheider

**Patentansprüche**

1. Verfahren zur Reststoffbehandlung in Müllverbrennungsanlagen, bei welchem die bei der Verbrennung anfallende Schlacke ohne vorherige Abschreckung in Wasser trocken ausgetragen wird, und in mindestens zwei Fraktionen aufgetrennt wird, wobei eine Fraktion den Feinanteil enthält, mit einer Rauchgasreinigung, die zumindest eine Stufe zur Entfernung von Schwefeldioxid aus dem Rauchgas umfasst, dadurch gekennzeichnet, dass nur die den Feinanteil der Schlacke enthaltende Fraktion gewaschen wird, und daß das Waschwasser dieses Waschprozesses, das im wesentlichen Alkali- und Erdalkali-Chloride und -Hydroxide enthält, in das Rauchgas der Verbrennungsanlage eingetragen wird und zur Abscheidung von Schwefeldioxid herangezogen wird.

2. Verfahren nach Anspruch 1, dadurch gekennzeichnet, dass der Waschprozess zweistufig ist und eine erste saure Wäsche mit verdünnter Salzsäure, die vorzugsweise aus einer nassen Rauchgasreinigung stammt, und eine zweite Wäsche mit Wasser umfasst.

3. Verfahren nach Anspruch 1 oder 2, dadurch gekennzeichnet, dass dem Waschwasser calziumhaltige Substanzen, z.B. pulverisierter Kalkstein, Calzium-Hydroxid oder feingemahlene Schlacke der Feinfraktion, zugemischt werden.

**Claims**

1. Process for treating residual materials in refuse incineration plants, in which the slag which is formed during the incineration is discharged in the dry state, with prior quenching in water, and is separated into at least two fractions, one fraction containing the fine constituents, including flue-gas cleaning which comprises at least one stage for removing sulphur dioxide from the flue-gas, characterized in that only that fraction of the slag which contains the fine constituents is washed, and in that the washing water from this washing process, which essentially contains alkaline metal and alkaline earth metal chlorides and hydroxides, is introduced into the flue-gas from the incineration plant and is used to separate out sulphur dioxide.

2. Process according to Claim 1, characterized in that the washing process involves two stages and comprises a first acidic wash with dilute hydrochloric acid, which preferably originates from a wet flue-gas cleaning operation, and a second wash with water.

3. Process according to Claim 1 or 2, characterized in that calcium-containing substances, e.g. powdered limestone, calcium hydroxide or finely ground slag from the fine fraction, are admixed to the washing water.

**Revendications**

1. Procédé pour le traitement de matières résiduelles dans des usines d'incinération d'ordures ménagères, dans lequel la scorie produite lors de l'incinération est évacuée sèche sans refroidissement brusque préalable dans de l'eau, et est séparée en au moins deux fractions, une fraction contenant les particules fines, avec une épuration de gaz de fumée, qui comprend au moins une phase d'élimination du dioxyde de soufre du gaz de fumée, caractérisé en ce que seulement la fraction contenant les particules fines de la scorie est lavée, et en ce que l'eau de lavage de ce procédé de lavage, qui contient essentiellement des chlorures et hydroxydes d'alcali et d'alcalino-terreux est introduite dans le gaz de fumée de l'usine d'incinération et est soutirée pour la séparation du dioxyde de soufre.

2. Procédé suivant la revendication 1, caractérisé en ce que le procédé de lavage comporte deux phases et comprend un premier lavage acide avec de l'acide chlorhydrique dilué, qui provient de préférence d'une épuration de gaz de fumée par voie humide et un deuxième lavage avec de l'eau.

3. Procédé suivant la revendication 1 ou 2, caractérisé en ce que des substances contenant du calcium, par exemple de la pierre à chaux pulvérisée, de l'hydroxyde de calcium ou de la scorie finement broyée de la fraction des particules fines, sont mélangées à l'eau de lavage.